# EUROPEAN PATENT SPECIFICATION

(11) **EP 2 039 246 B1**
(45) Date of publication and mention of the grant of the patent: **18.07.2012**
(21) Application number: 08011625.4
(22) Date of filing: 26.06.2008
(51) Int. Cl.: A01K 83/00

(54) **Fishhook**
Fischhaken
Hameçon

(30) Priority: 28.06.2007 JP 2007004924 U
(43) Date of publication of application: 25.03.2009
(73) Proprietor: Dohitomi & Co., Ltd., Kato-shi Hyogo-ken (JP)
(72) Inventor: Dohi, Yoshiro, Kato-shi, Hyogo-ken (JP)
(74) Representative: Glawe, Delfs, Moll

(56) References cited:
- FR-A- 2 792 806
- US-A- 5 685 108

## Description

The present invention relates to a fishhook having a hook tip on which barbs, as are normally provided, are not provided, i.e. a so-called barbless hook, see for example US 5 685 108 A.

### [Background Art]

In recent years, sport fishing has become popular, and a practice of so-called catch and release has become common in which a fish that has been caught is released at the place where it was caught. When exercising such a practice, care should be taken to avoid damage to the caught fish.

Barbless hooks have been invented for that purpose, which have been long used for fishing salmon or trout in the West. With the barbless hook, a caught fish can be released in a good condition without being damaged, and thus the barbless hook is an optimum fishhook for the catch and release practice.

However, in use of the barbless hook, inexperience may cause fishing failure because the hook tip has no barbs, as are normally provided. In order to avoid such a failure, a fishhook has been proposed in which a plurality of grooves in the form of a spiral, an X-shaped spiral, or a ring are formed in the shank near the hook tip (for example, see Japanese Utility Model Registration No. 3026052).

This prior art may avoid fishing failure, but the grooves are formed all around the shank, which may not be suitable for preventing damage to a fish that has been caught.

### [Problems to be Solved by the Invention]

The present invention has the object to provide an ideal fishhook that can meet the contradictory needs of avoiding damage to a caught fish and avoiding fishing failure.

### [Means for Solving the Problems]

In order to achieve the above described object, in the present invention, a plurality of grooves are formed at a position near the hook tip where normally barbs are provided. Thus, according to the invention defined in claim 1, the contradictory needs of avoiding damage to a caught fish and avoiding fishing failure, can be met.

A smaller number of grooves are preferably formed in a small-sized hook. For example, it is preferable that about five grooves are formed in a relatively large-sized hook, and a smaller number, i. e. about three grooves, are formed in a small-sized hook. This allows grooves to be easily formed in the small-sized hook.

### [Best Mode for Carrying Out the Invention]

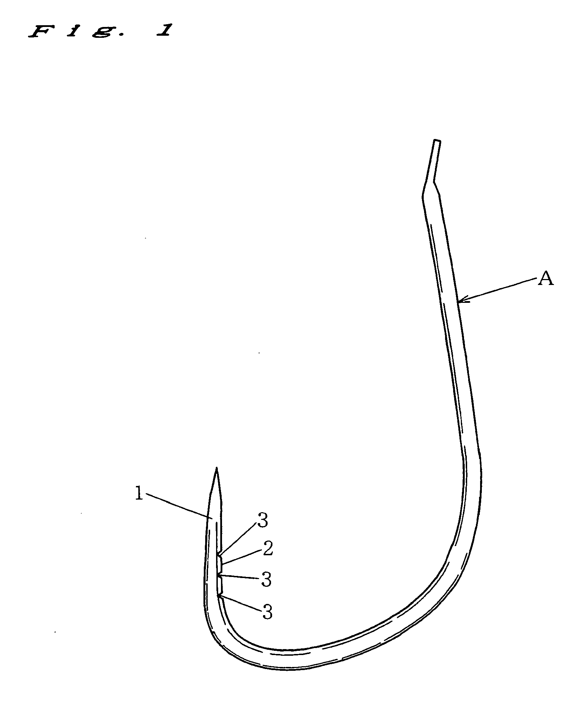

An embodiment of a fishhook according to the present invention will be described with reference to the drawings. Figure 1 is an enlarged side view of a fishhook according to a preferred embodiment of the present invention.

As shown in the Figure the fishhook A is hook shaped or essentially U-shaped, having a first substantially vertical leg provided with an eye or an equivalent thereof for fastening the hook to a fishing line, and a second, shorter, substantially vertical leg which ends in the hook tip 1. In a position 2 of this hook tip 1 a plurality of grooves 3 are provided. These grooves 3 are formed only at the inner side of the U-shaped fishhook, i. e. at a position where barbs are normally would be provided in a barbed fish hook. These grooves 3 on the one hand avoid damage to a fish that has been caught and on the other hand avoid fishing failure, i. e. prevents the fish from getting free of the fishhook by its own. These two contradictory aims can be met by the ideal fishhook having the above described configuration.

The grooves 3 are preferably as narrow and shallow as possible. This can further avoid damage to a caught fish, and also the fishhook becomes hard to break as compared with the case where the grooves 3 are broad and deep.

The number of the grooves 3 is preferably about three to five, and a smaller number of grooves are preferably formed in a small-sized hook. For example, it is preferable that about five grooves are formed in a relatively large-sized hook, and about three grooves are formed in the small-sized hook. This allows grooves to be easily formed in the small-sized hook.

Thus, the grooves 3 are formed at the position 2 in the hook tip 1 of the fishhook A where barbs are normally provided in a barbed fishhook. This avoids damage to a caught fish and at the same time prevents fishing failure.

The embodiment described above is an example for carrying out the present invention, but the shape of each part is not limited to the shown example, and various design choices may be made within the scope of the claims.

For example, the drawing shows the eye of the fishhook A having a general flattened shape, but the invention may also be applied to a ring-shaped (toroid-shaped) eye. The eye may be turned up or down or angled with respect to the shank, or may be straight without being angled.

## Claims

1. A barbless curved fishing hook with a first leg for attachment to a fishing line and a second leg carrying the hook tip (1), wherein a plurality of grooves (3) are formed in a position (2) near the hook tip (1), the grooves (3) being formed only at an inner side surface of the curved fishhook, **characterized in that** each of the plurality of grooves is V-shaped in cross section and formed by two surfaces intersecting at an acute angle, wherein the two surfaces intersect with the inner side surface at an obtuse angle.

2. The fishing hook according to claim 1, **characterized in that** the number of grooves (3) is greater in a large-sized hook and smaller in a small-sized hook.

3. The fishing hook according to claim 1, wherein there are 3 to 5 grooves.

4. The fishing hook according to claim 1, wherein said plurality of grooves (3) are formed to extend in a direction perpendicular to an axis of said hook tip (1).

5. The fishing hook according to any of claims 1 to 4, wherein each of the plurality of grooves (3) is depressed into the fishing hook at the position (2) near the hook tip (1) without projecting from the inner surface.

## Patentansprüche

1. Gebogener Angelhaken ohne Widerhaken mit einem ersten Bein zum Anbringen einer Angelschnur und einem zweiten Bein, das die Hakenspitze (1) trägt, wobei eine Anzahl von Nuten (3) in einer Position (2) nahe der Hakenspitze (1) ausgebildet sind, wobei die Nuten (3) nur an der Innenseitenfläche des gebogenen Angelhakens ausgebildet sind, **dadurch gekennzeichnet, dass** jede der Anzahl von Nuten im Querschnitt V-förmig ist und durch zwei Flächen gebildet ist, die sich in einem spitzen Winkel schneiden, und wobei die beiden Flächen sich mit der Innenseitenfläche in einem stumpfen Winkel schneiden.

2. Angelhaken nach Anspruch 1, **dadurch gekennzeichnet, dass** die Anzahl der Nuten (3) bei einem großformatigen Haken größer ist und bei einem kleinformatigen Haken kleiner.

3. Angelhaken nach Anspruch 1, wobei drei bis fünf Nuten vorhanden sind.

4. Angelhaken nach Anspruch 1, wobei die Anzahl der Nuten (3) ausgebildet sind, um sich in einer Richtung rechtwinklig zu einer Achse der Hakenspitze (1) zu erstrecken.

5. Angelhaken nach einem der Ansprüche 1 bis 4, wobei jede der Anzahl von Nuten (3) in den Angelhaken in der Position (2) nahe der Hakenspitze (1) ohne von der Innenfläche vorzustehen eingepresst ist.

## Revendications

1. Hameçon incurvé sans barbillon avec une première patte destinée à être fixée sur une ligne de pêche et une seconde patte comportant la pointe d'hameçon (1), dans lequel une pluralité de rainures (3) est formée à un emplacement (2) proche de la pointe d'hameçon (1), les rainures (3) étant formées uniquement sur une surface latérale interne de l'hameçon incurvé, **caractérisé en ce que** chacune de la pluralité de rainures est en forme de V en section transversale et est constituée par deux surfaces se coupant suivant un angle aigu, dans lequel les deux surfaces coupent la surface latérale interne suivant un angle obtus.

2. Hameçon selon la revendication 1, **caractérisé en ce que** le nombre de rainures (3) est plus grand sur un hameçon de grande taille et plus faible sur un hameçon de faible taille.

3. Hameçon selon la revendication 1, dans lequel il est formé de 3 à 5 rainures.

4. Hameçon selon la revendication 1, dans lequel ladite pluralité de rainures (3) est formée de manière à s'étendre suivant une direction perpendiculaire à un axe de ladite pointe d'hameçon (1).

5. Hameçon selon l'une quelconque des revendications 1 à 4, dans lequel chacune de la pluralité de rainures (3) est creusée sur l'hameçon au niveau de l'emplacement (2) proche de la pointe d'hameçon (1) sans s'étendre en saillie par rapport à la surface interne.
